(19) Europäisches Patentamt
European Patent Office
Office européen des brevets

(11) Numéro de publication: **0 359 648 B1**

(12) # FASCICULE DE BREVET EUROPEEN

(45) Date de publication de fascicule du brevet: **10.05.95**

(51) Int. Cl.$^6$: **C08G 18/38**, G02F 1/35

(21) Numéro de dépôt: **89402475.1**

(22) Date de dépôt: **12.09.89**

(54) **Polyuréthannes, actifs en optique non linéaire et matériaux les contenant dispositif optique les contenant et procédés de fabrication de ces composés et matériaux.**

(30) Priorité: **16.09.88 FR 8812079**

(43) Date de publication de la demande:
**21.03.90 Bulletin 90/12**

(45) Mention de la délivrance du brevet:
**10.05.95 Bulletin 95/19**

(84) Etats contractants désignés:
**AT BE CH DE ES FR GB GR IT LI LU NL SE**

(56) Documents cités:
**EP-A- 0 243 806**
**EP-A- 0 244 288**
**EP-A- 0 262 680**
**DE-A- 2 426 172**
**DE-A- 2 530 809**
**JP-A-63 175 837**

(73) Titulaire: **FLAMEL TECHNOLOGIES**
**Parc Club du Moulin à Vent**
**33, avenue du Docteur Georges Levy**
**F-69693 Venissieux Cédex (FR)**

(72) Inventeur: **Mignani, Gérard**
**2, avenue des Frères Lumière**
**F-69008 Lyon (FR)**
Inventeur: **Barthelemy, Pascal**
**21, rue de la Part Dieu**
**F-69003 Lyon (FR)**
Inventeur: **Meyrueix, Rémi**
**112, Cours Albert Thomas**
**F-69008 Lyon (FR)**

(74) Mandataire: **Thibault, Jean-Marc et al**
**Cabinet Beau de Loménie**
**51, Avenue Jean Jaurès**
**B.P. 7073**
**F-69301 Lyon Cédex 07 (FR)**

EP 0 359 648 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un polyuréthanne permettant de réaliser des matériaux actifs en optique non linéaire.

Les matériaux actifs en optique non linéaire peuvent avoir une forte susceptibilité cubique ($\chi^3$) ou une forte susceptibilité quadratique ($\chi^2$). L'invention concerne plus particulièrement des polymères ou matériaux à forte susceptibilité quadratique après polarisation et qui présentent également une bonne susceptibilité cubique.

On connait déjà de nombreux polymères présentant la propriété d'être actif en optique non linéaire. Dans certains cas, cette activité est supérieure à celle des produits inorganiques couramment utilisés.

Les polymères utilisés en ONL possèdent généralement des groupements conjugués à électrons délocalisés qui leur confèrent une valeur importante de la susceptibilité cubique $\chi^{(3)}$.

Par ailleurs, pour certains polymères, comme ceux dont il est question dans la présente invention, les groupements responsables de l'activité ONL sont non centrosymétriques et ont une forte hyperpolarisabilité du 2ème ordre z.

Ces groupements non centrosymétriques sont le plus souvent des groupements conjugués à transfert de charges dont l'orientation au sein du matériau par un champ électrique de polarisation rend le matériau non centrosymétrique. Celui-ci possède alors une susceptibilité quadratique $\chi^{(2)}$ non nulle.

Jusqu'à présent, ces polymères étaient constitués par des polymères à chaîne classique, tels que des polyoléfines, polyacrylates, polyméthacrylates, polychloroacrylate ou polysiloxane, par exemple, sur lequel étaient greffés des groupements polaires à transfert de charge.

A titre d'exemple, on peut citer les brevets européen n° 262680 et français n° 2597109. Ces polymères présentant toutefois certains inconvénients, et notamment la conservation de leur propriété en optique non linéaire. En effet, les segments greffés doivent présenter une certaine mobilité pour permettre leur orientation dans un champ électrique. Cependant, ils conservent toujours une mobilité résiduelle qui leur permet, au cours du temps, de perdre leur orientation entraînant une diminution de la non centrosymétrie électronique générée par le champ électrique, et de ce fait une diminution de l'activité en optique non linéaire. Ce phénomène est illustré dans l'article de C. **YE** et al "M.R.S. Symposium Proc" vol 109 (Non linear opt. Proc. of polymères p 263, et. J. HEEGER 1988.

Un autre inconvénient de ces polymères réside dans le fait que le nombre de groupements polaires à transfert de charges est généralement faible, car il est fonction de la structure du polymère. De plus, le nombre de groupements greffés ne peut être très élevé sans entraîner une modification importante des propriétés du polymère.

La demande de brevet européen n° **0 243 806** décrit des polyuréthannes ayant une activité en optique non linéaire, dont le monomère comprend une unité polaire à transfert de charge du type cyano-quino diméthane, de formule suivante :

$$\left[ HN - \underset{\underset{X}{\|}}{C} - NH -(CH_2)_{10}- \right]_m \quad m > 3$$

**X** = quinodiméthane.

Ces polymères n'appartiennent pas au domaine de la présente invention qui est celui de l'électrooptique. Ils sont, au contraire, destinés à la génération de second harmonique dans le domaine des rayonnements visibles. Leur substituant **X**, de taille réduite, leur confère typiquement une transparence dans le visible.

Enfin, ils sont caractérisés par une activité électrooptique relativement faible.

On connaît, également, des matériaux présentant une activité en optique non linéaire constitués par une matrice, généralement un polymère, dans laquelle est dissout un composé actif en optique non linéaire du type molécule conjuguée à transfert de charges.

Toutefois, ces composés sont généralement peu solubles dans la matrice et également, possèdent une mobilité résiduelle dans celle-ci qui provoquera, au cours du temps, une désorientation de ces composés rendant ces matériaux controsymétriques d'un point de vue de charges électriques.

En effet, l'activité quadratique en optique non linéaire est engendrée par la délocalisation des électrons et une non centrosymétrie de charges importantes à l'échelle moléculaire et à l'échelle du matériau.

On connaît, également, par la demande de brevet **JP 63 17 837** des polyuréthannes obtenus à partir d'un diisocyanate et d'un chromophore ayant une activité en optique non linéaire et présentant deux extrémités réactives pour la polymérisation, de nature hydroxylique.

Ces polymères ne sont pas orientés et l'on s'intéresse, en fait, uniquement à leur activité optique non linéaire cubique ($\chi^3$).

Pour pallier notamment à ces inconvénients et à ces carences, l'invention propose un polymère polyuréthanne orienté, présentant une bonne activité en optique non linéaire, notamment une bonne activité quadratique, dont les groupements polaires à transfert de charges font partie du motif de répétition ou récurrent du polymère et forment un maillon de la chaîne principale ce qui supprime leur mobilité résiduelle permettant ainsi de réaliser un matériau conservant son activité en optique non linéaire au cours du temps. Par ailleurs, comme les groupements polaires à transfert de charges font partie intégrante de la chaîne macromoléculaire du polymère, leur nombre dans celle-ci sera très élevé ce qui améliore l'activité en optique non linéaire du matériau.

A cet effet, l'invention propose un polymère du type polyuréthanne constitué au moins par le motif récurrent de formule (I) suivante :

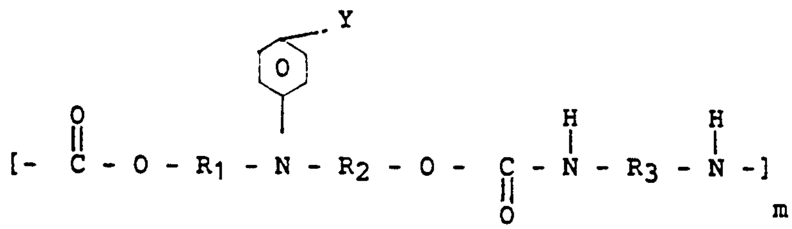

dans laquelle:

- **m** est un nombre supérieur à 5,
- **R**$_1$, **R**$_2$ identiques ou différents représentent un radical alkyle ou un radical aromatique,
- **R**$_3$ représente un radical hydrocarboné aliphatique linéaire ou cyclique, aromatique ou arylaliphatique,
- **Y** représente un groupement comprenant un radical à électrons $\pi$ délocalisés et un groupement accepteur d'électrons (A) ,

caractérisé en ce qu'il est orienté par un champ électrique à une température supérieure à sa température de transition vitreuse et refroidi, de façon à posséder une activité optique non linéaire quadratique $\chi^2_{333}$ (-$\omega$, $\omega$, o), stable et supérieure ou égale à 80 x $10^{-12}$ m x $V^{-1}$ à 633 nm, ledit $\chi^2_{333}$ (- $\omega$, $\omega$, o) étant donné par la relation : $\chi^2_{333}$ (- $\omega$, $\omega$, o) = 3.$\chi^2_{113}$ (- $\omega$, $\omega$, o), le $\chi^2_{113}$ (- $\omega$, $\omega$, o) étant lui-même obtenu à partir d'une expérience d'électrooptique consistant :

- à déposer un film du polyuréthanne sur une lame de verte recouverte d'un oxyde conducteur transparent ($SnO_2$),
- à recouvrir la face extérieure du film par une couche d'or semi-transparente, l'oxyde et l'or servant d'électrodes à l'aide desquelles on polarise le film pour le rendre non centrsymétrique,
- à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,
- à soumettre le film à une tension alternative de 1 KHz et 10 V,
- et à déduire la susceptibilité quadratique $\chi^2_{113}$ (- $\omega$, $\omega$, o) du retard de phase $\Delta\phi$ provoqué par la tension appliquée au film, grâce à la relation suivante :

$$\Delta\phi = \frac{2\pi}{\lambda} . L . \frac{\chi^2_{113}}{n} . \frac{V}{L} = \frac{2\pi \chi^2_{113} V}{\lambda . n}$$

dans laquelle :

- $\lambda$ est la longueur d'onde laser,
- n est l'indice de réfraction du film,
- V est la tension électrique du champ appliqué au film,

- L est l'épaisseur du film.

Les groupements **Y** comprenant des radicaux à électrons délocalisés font partie intégrante du motif récurrent du polymère et donc ont une position fixe par rapport à la chaîne principale du polymère. De ce fait, après création d'une non centrosymétrie de charges par action d'un champ électrique, la mobilité des groupements à transfert de charges devient très faible et même nulle permettant ainsi une conservation de l'activité en optique non linéaire du matériau, pendant son vieillissement.

De préférence, **m** est supérieur à 10, de préférence compris entre 10 et 4 000.

Selon une autre caractéristique de l'invention, pour diminuer encore la mobilité des groupements polaires à transfert de charges, le polymère est réticulé,concomitamment ou après orientation par un champ électrique, au moyen de composés polyfonctionnels comme par exemple des triisocyanates, triols, triallyles ajoutés au mélange. Toutefois, cette réticulation n'est pas indispensable.

Selon une autre caractéristique de l'invention, les polyuréthannes de l'invention sont amorphes.

Selon une caractéristique préférée de l'invention, le groupement $\gamma$ de la formule (I) est choisi dans le groupe des radicaux suivants :

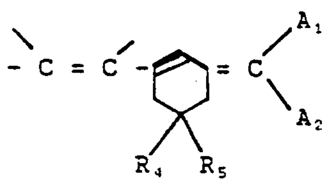 ; 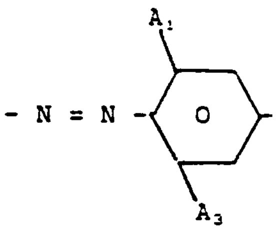 ; 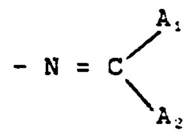

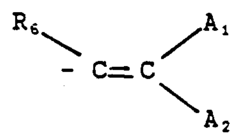

Dans lesquelles :

$A_1$, $A_2$, $A_3$ identiques ou différents représentent l'hydrogène ou un radical accepteur d'électrons, ils ne peuvent représenter simultanément l'hydrogène.

Les radicaux $A_1$, $A_2$, $A_3$ accepteur d'électrons de l'invention sont, de préférence, choisis dans le groupe comprenant les radicaux nitro, cyano, - $CO_2$ $R_7$, - $PO_3$ $(R_7)_2$, $R_7$ étant un radical alkyle inférieur, de préférence les radicaux éthyl ou propyl.

$R_6$ représente l'hydrogène, un radical alkyl inférieur ou un radical accepteur d'électrons (A)

Les radicaux accepteurs d'électrons préférés ($A_1$, $A_2$, $A_3$) de l'invention sont les radicaux cyano et nitro, et plus particulièrement les associations cyano/cyano et cyano/nitro.

Selon une autre caractéristique, les radicaux $R_1$ et $R_2$ sont des chaines méthylidènes, substituées ou non, comprenant de 1 à 6 atomes de carbone.

Avantageusement, le polyuréthanne de l'invention a une température de transition vitreuse (Tg) supérieure à 30° C, de préférence comprise entre 40 et 250° C

L'invention a également pour objet un procédé de synthèse d'un polyuréthanne conforme à celui décrit ci-dessus et consistant à faire réagir un diisocyanate de formule (II) :

**(II)** ONC-$R_3$-CNO

dans laquelle $R_3$ est un radical aliphatique linéaire ou cyclique, aromatique, ou arylaliphatique, avec un composé de formule (III) suivante :

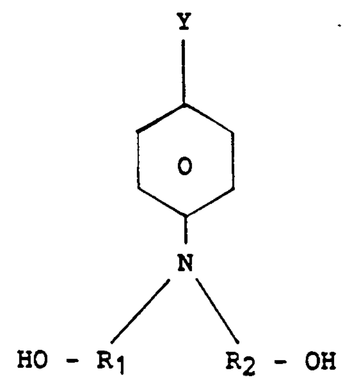

dans laquelle : Y, $R_1$ et $R_2$ ont les significations ci-dessus.

Ce procédé est caractérisé en ce qu'il consiste :

- à faire réagir un diisocyanate de formule :

**(II)** $ONC-R_3-CNO$

avec un composé de formule :

**(III)**

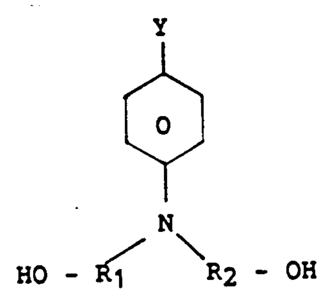

- à chauffer le polymère obtenu à une température au moins égale à sa température de transition vitreuse,
- à soumettre ledit polymère chauffé à un champ électrique, de façon à conférer au polymère une activité optique non linéaire quadratique $\chi^2_{333}$ (- $\omega$, $\omega$, o), stable et supérieure ou égale à 80 x $10^{-12}$ m x $V^{-1}$ à 633 nm, ledit $\chi^2_{333}$ (- $\omega$, $\omega$, o) étant donné par la relation : $\chi^2_{333}$ (- $\omega$, $\omega$, o) = 3.$\chi^2_{113}$ (- $\omega$, $\omega$, o), le $\chi^2_{113}$ (- $\omega$, $\omega$, o) étant lui-même obtenu à partir d'une expérience d'électrooptique consistant :
  . à déposer un film du polyuréthanne sur une lame de verte recouverte d'un oxyde conducteur transparent ($SnO_2$),
  . à recouvrir la face extérieure du film par une couche d'or semi-transparente, l'oxyde et l'or servant d'électrodes à l'aide desquelles on polarise le film pour le rendre non centrsymétrique,
  . à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,
  . à soumettre le film à une tension alternative de 1 KHz et 10 V,
  . et à déduire la susceptibilité quadratique $\chi^2_{113}$ (- $\omega$, $\omega$, o) du retard de phase $\Delta\phi$ provoqué par la tension appliquée au film, grâce à la relation suivante :

$$\Delta\phi = \frac{2\pi}{\lambda} . L . \frac{\chi^2_{113}}{n} . \frac{V}{L} = \frac{2\pi \chi^2_{113} V}{\lambda . n}$$

dans laquelle :

. $\lambda$ est la longueur d'onde laser,
. n est l'indice de réfraction du film,
. V est la tension électrique du champ appliqué au film,
. L est l'épaisseur du film,
- puis à le refroidir.

Avantageusement, pour permettre une réticulation du polyuréthanne, un composé polyfonctionnel, tel qu'un triisocyanate, polyol, polyallyle, est ajouté aux composés difonctionnels de formules (II) et (III). On procède ainsi à une polymérisation partielle du mélange comprenant les composés difonctionnels et les composés polyfonctionnels.

La suite du procédé consiste :
- à faire réagir :
  . des composés difonctionnels du type diisocyanate de formule :

$$ONC\text{-}R_3\text{-}CNO$$

  . des composés difonctionnels de formule :

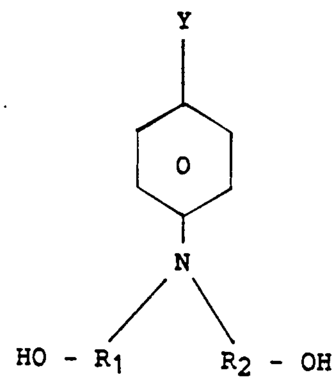

  . et des composés polyfonctionnels,

  de façon à faire une polymérisation partielle du mélange comprenant les composés difonctionnels et des composés polyfonctionnels,
- à chauffer le prépolymère ainsi obtenu à une température supérieure ou égale à sa température de ramollissement ou sa température de transition vitreuse électrique,
- à soumettre le prépolymère chauffé à un champ électrique, de façon à conférer au prépolymère une activité optique non linéaire quadratique $\chi^2{}_{333}$ (- $\omega$, $\omega$, o), stable et supérieure ou égale à 80 x $10^{-12}$ m x $V^{-1}$ à 633 nm, ledit $\chi^2{}_{333}$ (- $\omega$, $\omega$, o) étant donné par la relation : $\chi^2{}_{333}$ (- $\omega$, $\omega$, o) = 3.$\chi^2{}_{113}$ (- $\omega$, $\omega$, o), le $\chi^2{}_{113}$ (- $\omega$, $\omega$, o) étant lui-même obtenu à partir d'une expérience d'électrooptique consistant :
  . à déposer un film du polyuréthanne sur une lame de verte recouverte d'un oxyde conducteur transparent ($SnO_2$),
  . à recouvrir la face extérieure du film par une couche d'or semi-transparente, l'oxyde et l'or servant d'électrodes à l'aide desquelles on polarise le film pour le rendre non centrsymétrique,
  . à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,
  . à soumettre le film à une tension alternative de 1 KHz et 10 V,
  . et à déduire la susceptibilité quadratique $\chi^2{}_{113}$ (- $\omega$, $\omega$, o) du retard de phase $\Delta\phi$ provoqué par la tension appliquée au film, grâce à la relation suivante :

$$\Delta\phi = \frac{2\pi}{\lambda} \cdot L \cdot \frac{\chi^2_{113}}{n} \cdot \frac{V}{L} = \frac{2\pi\chi^2_{113}\,V}{\lambda \cdot n}$$

dans laquelle :

.. λ est la longueur d'onde laser,

.. n est l'indice de réfraction du film,

.. V est la tension électrique du champ appliqué au film,

.. L est l'épaisseur du film,

- puis à polymériser complètement le polymère.

A titre d'exemple de diisocyanate convenable pour l'invention, on peut citer :

- le diisocyanato-1,3 propane,
- le diisocyanato-1,4 butane,
- le diisocyanato-1,5 pentane,
- le diisocyanato-1,6 hexane,
- le diisocyanato-1,,4 éthyl-2 butane,
- le diisocyanato-1,5 méthyl-2 pentane,
- le diisocyanato-1,6 triméthyl-2,2,4 hexane,
- le diisocyanato-1,6 triméthyl-2,4,4 hexane
- le diisocyanato-1,2 cyclohexane,
- le diisocyanato-1,4 cyclohexane,
- le bis (isocyanatométhyl)-1,2 cyclobutane,
- le bis (isocyanato-4 cyclohexyl) méthane,
- le triméthyl-3,3,5 isocyanatométhyl-5 isocyanato-1 cyclohexane,
- le bis (isocyanatométhyl)-1,4 benzène,
- le bis (isocyanatométhyl)-1,2 benzène,
- le diisocyanato diphényl propane,
- le diisocyanato diphényl méthane,
- le diisocyanato diphényl éther,
- le naptalène diisocyanato.

Ces diisocyanates peuvent être utilisés séparément ou sous forme de mélanges de plusieurs d'entre eux.

Comme composés polyfonctionnels, on peut citer à titre d'exemple les triisocyanates suivants : le triphénylméthane triisocyanate, le trimère de l'hexaméthylène diisocyanate, le triol N, N′,N″ tris (hydroxyalkyl) hexahydrotriazine ou le triallyle suivant : N, N′, N″ tris (allyl) hexahydrotriazine ainsi que les polyols de la famille des polyérhytritol tel que le pentaérhytritol.

Il est également possible, selon l'invention d'utiliser un mélange de diols dont l'un au moins est un composé de formule (III). Ainsi, il est possible de contrôler la concentration en composé de formule (III) et donc le nombre de groupements polaires à transfert de charges dans le polymère.

Toutefois, pour avoir une meilleure activité en optique non linéaire, le mode de réalisation préféré de l'invention consiste à utiliser uniquement un diol de formule (III) ou un mélange de diols de formule (III).

L'invention a, encore, pour objet un matériau présentant une activité en optique non linéaire comprenant comme composant actif un polyuréthanne conforme à la description ci-dessus.

Ce matériau est obtenu, par exemple, par chauffage du polyuréthanne, à une température au moins égale à sa température de transition vitreuse (Tg). Le polyuréthanne ainsi chauffé est soumis à un champ électrique pour créer une non centrosymétrie de charges dans le matériau.

Le polymère ainsi orienté ou "activé" est alors refroidi puis est utilisé comme composant d'un dispositif optique actif, tel que des dispositifs de traitement électrooptique ou purement optique, comme des transducteurs, des modulateurs, amplificateurs paramétriques etc...

Selon un second mode de réalisation du procédé de fabrication du matériau de l'invention, dans le cas où le polyuréthane utilisé est réticulé, on réalise dans un premier temps une polymérisation partielle du mélange de composés difonctionnels et polyfonctionnels puis on chauffe le prépolymère ainsi obtenu à une température supérieure à sa température de ramollissement ou température de transition vitreuse (Tg) pour obtenir une mobilité convenable de groupements permettant de réaliser l'orientation des groupements polaires à transfert de charges par application d'un champ électrique. Enfin, la polymérisation totale est réalisée selon tout procédé connu.

Ainsi, il est possible par cette technique de pouvoir orienter les groupements polaires à une température suffisamment basse pour éviter tout dégradation du polyuréthane, puis par réticulation finale, d'obtenir un matériau présentant une température de transition vitreuse élevée et donc de diminuer encore la mobilité résiduelle des groupements polaires dans le matériau.

Le matériau peut être obtenu sous une forme quelconque, telle que film, fibre, pièce moulée ou extrudée etc....Il peut également être utilisé pour former un revêtement, notamment selon la technique

appelée "spin-coating". Sa mise en forme peut être réalisée par tout procédé comme pour la mise en forme de matière polymérisable ou polymérisée telle que par exemple une mise en forme par fusion, ramollissement ou par mise en solution et évaporation du solvant.

Enfin, différents additifs peuvent être ajoutés au polyuréthanne de l'invention, par exemple pour faciliter sa mise en forme. Il peut également être utilisé en mélange avec un autre polymère actif ou non actif en optique non linéaire.

Des précisions, et explications sont données ci-dessous sur l'activité des matériaux en optique non linéaire et la détermination de cette activité.

L'activité des matériaux en optique non linéaire est déterminée par la mesure des susceptibilités de second, troisième ou énième ordre.

Les susceptibilités d'un matériau sont directement reliées à la polarisation du matériau par la relation fondamentale suivante :

$$\underline{P} = \underline{Po} + \chi^1 . \underline{E} + \chi^2 \underline{E,E} + \chi^3 \underline{E,E,E} + .....$$

dans laquelle : $\underline{P}$ et $\underline{Po}$ représentent la polarisation respectivement en présence et en absence de champ électromagnétique.

E représente le champ électrique d'excitation

$\chi^1$, $\chi^2$, $\chi^3$ représentent les susceptibilités linéaires et non linéaires du matériau.

En effet, le coefficient $\chi^1$ reflète son activité en optique linéaire.

Les coefficients $\chi^2$ et $\chi^3$ représentent les susceptibilités respectivement de second et troisième ordre.

Ces susceptibilités reflètent l'anharmonicité du potentiel électronique dans le matériau.

Par ailleurs, les susceptibilités d'ordre impair, tel que la susceptibilité $\chi^3$ ne sont jamais nulles pour tous matériaux. Au contraire, les susceptibilités d'ordre pair tel que la susceptibilité quadratique $\chi^2$ sont nulles pour les matériaux centrosymétriques.

Il est intéressant d'utiliser des matériaux présentant une polarisation non linéaire non nulle pour les applications en optique non linéaire telles que, par exemple, les dispositifs électrooptiques, les modulateurs électrooptiques, guidés ou non guidés ou pour les applications purement optiques telles que les amplificateurs paramétriques, les dispositifs doubleurs de fréquence.

Pour apprécier et mesurer le coefficient la susceptibilité $\chi^2$ des matériaux, on détermine celle-ci par comparaison avec celle d'un matériau de référence, par exemple le quartz ou le dihydrogénophosphate de potassium (KDP).

La mesure de la susceptibilité $\chi^2$ est réalisée généralement aux fréquences ($-2\omega$, $\omega$,$\omega$ ) dans une expérience de doublement d'harmonique décrite dans l'article de S.K.KURTZ publié dans Quantum Electronics ed. H.RABIN, C.L.TANG academic Press, 1975, tome I pages 209 - 281.

Il est également possible de mesurer $\chi^2$ aux fréquences ($-\omega$ ; $\omega$, o) dans une expérience d'électrooptique. Pour cela, le film est déposé sur une lame de verre recouverte d'un oxyde conducteur transparent ($SnO_2$). La face extérieure du film est recouverte par une couche d'or semi-transparente, l'oxyde et l'or servant d'électrodes par lesquelles on polarise le film pour le rendre non centrosymétrique. Après refroidissement, l'ensemble est placé dans l'un des bras d'un interféromètre de MACH ZENDER et traversé sous incidence normale par un faisceau laser de longueur d'onde égale à 633 nm.

Le film est ensuite soumis à une tension alternative de 1 KHz et 10V.

La susceptibilité quadratique $\chi^2_{113}$ ($-\omega$, $\omega$ ,o) est déduite du retard de phase $\Delta\phi$ provoqué par la tension appliquée au film par la relation suivante :

$$\Delta\phi = \frac{2\pi}{\lambda} . L . \frac{\chi^2_{113}}{n} . \frac{V}{L} = \frac{2\pi\chi^2_{113} V}{\lambda . n}$$

Dans laquelle :

λ est la longueur d'onde laser

n est l'indice de réfraction du film

V est la tension électrique du champ appliqué au film

L est l'épaisseur du film.

Le deuxième coefficient de susceptibilité $\chi^2{}_{333}$ est donné par la relation

$\chi^2{}_{333} = 3.\ \chi^2{}_{113}$

Cette relation est plus amplement décrite dans l'article de K.D. SINGER et al parue dans J. Opt. SOc. Am. B vol 4 n° 6 pp 968 et suiv. (1987).

Les susceptibilités $\chi^2{}_{113}$ et $\chi^2{}_{333}$ sont reliées au coefficient électrooptique $r_{ijk}$ par les relations suivantes :

$$r_{113} = \frac{-2\chi^2{}_{113}}{n^4} \quad \text{et} \quad r_{333} = \frac{-2\chi^2{}_{333}}{n^4}$$

Dans lesquelles n représente l'indice de réfraction du matériau.

D'autres buts, détails et caractéristiques de l'invention apparaîtront plus clairement au vu des exemples donnés ci-dessous uniquement à titre indicatif et d'illustration.

Exemple 1 :

Préparation du polymère (A) de motif récurrent :

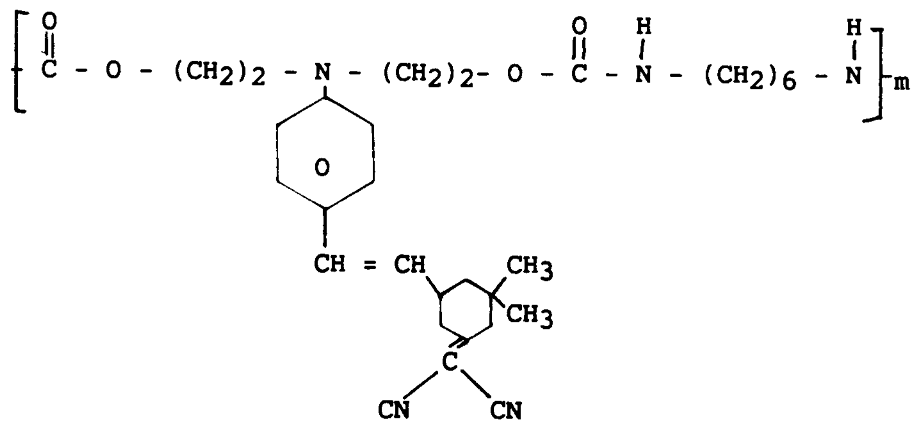

(A)

Ce polymère est obtenu par réaction d'un diisocyanate, l'hexaméthylène diisocyanate sur un composé de formule suivante :

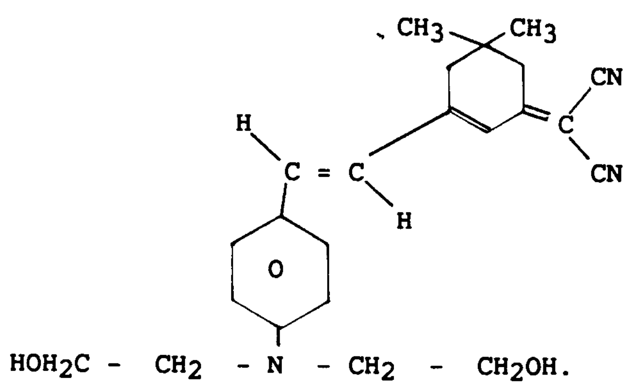

Ce composé est obtenu par réaction du composé de formule

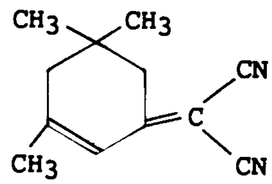

sur le composé de formule :

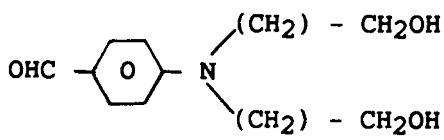

en milieu éthanolique et en présence de pipéridine comme catalyseur.

Le produit est récupéré par évaporation du solvant et séparation sur une colonne de gel de silice (éluant : acétate d'éthyle) sous la forme d'un solide rouge - violet présentant un point de fusion de 168 °C.

Ce procédé de fabrication et les conditions opératoires de la réaction sont notamment décrits dans la demande de brevet allemand n° 2345189, l'article de Ralf LEMKE "Knoevenagel - Kondensationen in Dimethylformanid" publié dans Synthésis 5 (1974), 359 ou l'article "Solvatochromie von 80 µm in verschiedmen Alkokolen bei Arylidenisophorm - Abkömmlignen" du même auteur parue dans Chem. Ber, 103, (1970), 1894.

Ce composé est mis en solution dans un solvant anhydre (la 1,3 diméthylimidazolidinone). Cette solution est ensuite introduite dans une solution constituée d'hexaméthyléne diisocyanate dans le même solvant que ci-dessus, contenant également un catalyseur de polycondensation tel que le dilaurate dibutylétain. Ce mode opératoire de préparation du composé A est classique et couramment utilisé pour la fabrication des polymères polyuréthannes. La température de réaction est de l'ordre de 105 °C.

Après précipitation par coulée du milieu réactionnel dans de l'eau, on obtient un précipité rouge-lie de vin qui est récupéré par filtration.

La masse moléculaire en poids du polymère récupéré, déterminée par chromatographie d'exclusion de gel dans la N - méthyl pyrrolidone (NMP) est de 54300 g. (m est égal à environ 30)

Une analyse thermique différentielle montre qu'il n'y a pas de transition endothermique correspondant à la fusion. La température de transition vitreuse Tg est égale à 45 °C, déterminée par la méthode du pendule à fibre.

Le polymère obtenu est soluble dans l'acétone, les solvants chlorés, le diméthyl formamide, le diméthylsulfoxyde, la N. méthyl pyrrolidone mais insoluble dans l'eau et les alcools.

Les analyses de spectrométrie ultraviolette, de RMN confirment la structure du polymère indiqué en début de paragraphe et montrent que la longueur d'onde d'adsorption maximale dans l'UV en milieu N méthylpirrolydone est égale à 520 nm.

Ce polymère après mise en forme selon la technique du spin-coating en film d'épaisseur 3,37 µm à partir d'une solution à 10 % dans la cyclohexanone, a été soumis à un champ électrique polarisant de 50 v/µm après chauffage à une température de l'ordre de 100 °C pendant quelques secondes, puis refroidi à température ambiante.

La détermination de son activité en électrooptique à une longueur d'onde de 633 nm montre qu'il possède une susceptibilité quadratique

$\chi^{2}_{333}$ (-ω ; ω,o) égale à 130 x $10^{-12}$ m.$V^{-1}$

Exemple 2

Préparation du polymére (B) de motif récurrent :

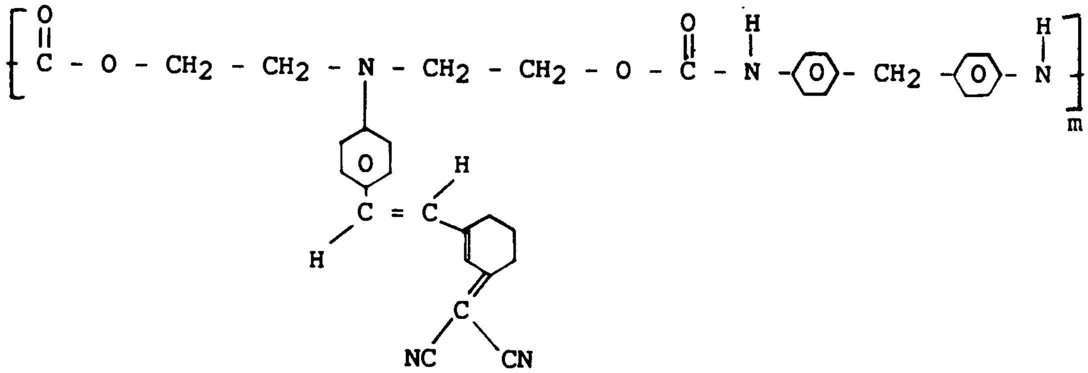

Ce polymère est obtenu de manière analogue à celui de l'exemple 1, en remplaçant l'hexaméthyléne diisocyanate par le diphénylméthanediisocyanate.

Le produit obtenu qui ne montre pas de transformation endothermique par analyse thermique différentielle a une température de transition vitreuse (Tg) égale à 90 °C, une masse moléculaire en poids de 21000 (m est égal à 18 environ) et une longueur d'onde d'adsorption maximale de 505 nm. les caractéristiques ont été déterminées selon les méthodes décrites dans l'exemple 1.

La détermination de ses caractéristiques en optique non linéaire et plus particulièrement de sa susceptibilité de deuxième ordre

$$\chi^{2}_{333}$$

est réalisée selon le mode opératoire décrit dans l'exemple 1. Toutefois l'orientation des groupements est réalisée à une températue de 120 °C pendant quelques minutes.

La détermination de son activité en électrooptique à une longueur d'onde laser de 633 nm montre que

$$\chi^{2}_{333}$$

(- ω, ω,o) est égale à 95 x $10^{-12}$ $mV^{-1}$.

Exemple 3 : Préparation d'un polymère réticulé

Pour la réalisation de ce polymère :

1er. On synthétise comme décrit dans l'exemple 1 un prépolymère, en engageant un excès du diol par rapport au diisocyanate. Cet excès atteint 4 % molaire.

Le prépolymère ainsi obtenu est terminé majoritairement par des groupements hydroxyles.

Il possède une température de transition vitreuse égale à 49 °C.

2ème. Ce prépolymère est remis en solution dans la cyclohéxanone à une concentration de 15 %. On ajoute alors le catalyseur (dibutyle dilaurate d'étain) et un léger excès par rapport aux groupements hydroxyles, du trimère de l'HDI de formule suivante :

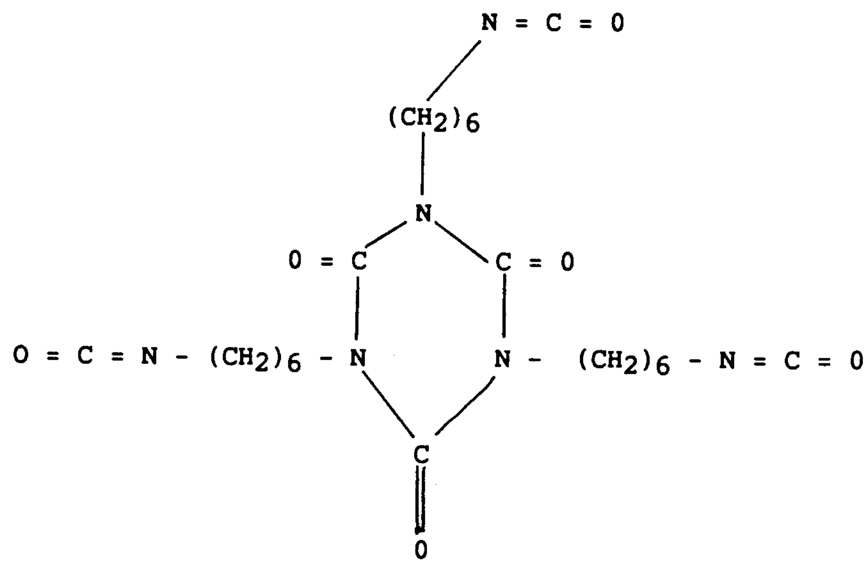

Le prépolymère est enduit au tire-film en film d'épaisseur 3,2 µm sur un support chauffant à partir d'une solution à 10 % dans le cyclohexanone, puis est soumis à un champ polarisant de 50 V/µm à une température de 50 °C pendant 10 minutes. La température est ensuite portée à 120 °C sous champ électrique, pour effectuer une réticulation complète, puis ramenée à l'ambiante.

Ainsi on obtient un matériau présentant une température de transition vitreuse de 80 °C et une susceptibilité électrooptique $\chi^{(2)}$ (-s,s,o) à 633 nm de $80.10^{-12}$ $mV^{-1}$.

**Revendications**

1. Polyuréthanne de motif récurrent répondant à la formule suivante :

(I)

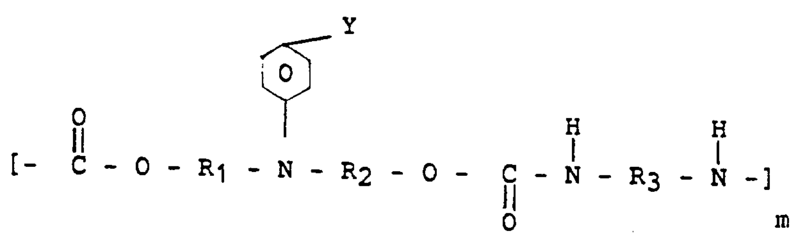

dans laquelle :

- **m** est un nombre supérieur à 5,
- $\mathbf{R_1}$, $\mathbf{R_2}$ identiques ou différents représentent un radical alkyle ou un radical aromatique,
- $\mathbf{R_3}$ représente un radical hydrocarboné aliphatique linéaire ou cyclique, aromatique ou arylaliphatique,
- **Y** représente un groupement comprenant un radical à électrons $\pi$ délocalisés et un groupement accepteur d'électrons (A) ,

caractérisé en ce qu'il est orienté par un champ électrique à une température supérieure à sa température de transition vitreuse et refroidi, de façon à posséder une activité optique non linéaire quadratique $\chi^2{}_{333}$ (- ω, ω, o), stable et supérieure ou égale à 80 x $10^{-12}$ m x $V^{-1}$ à 633 nm, ledit $\chi^2{}_{333}$ (- ω, ω, o) étant donné par la relation : $\chi^2{}_{333}$ (- ω, ω, o) = $3.\chi^2{}_{113}$ (- ω, ω, o), le $\chi^2{}_{113}$ (- ω, ω, o) étant lui-même obtenu à partir d'une expérience d'électrooptique consistant :

- à déposer un film du polyuréthanne sur une lame de verte recouverte d'un oxyde conducteur transparent ($SnO_2$),
- à recouvrir la face extérieure du film par une couche d'or semi-transparente, l'oxyde et l'or servant d'électrodes à l'aide desquelles on polarise le film pour le rendre non centrsymétrique,

- à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,
- à soumettre le film à une tension alternative de 1 KHz et 10 V,
- et à déduire la susceptibilité quadratique $\chi^2_{113}$ (- ω, ω, o) du retard de phase $\Delta\phi$ provoqué par la tension appliquée au film, grâce à la relation suivante :

$$\Delta \phi = \frac{2\pi}{\lambda} . L . \frac{\chi^2_{113}}{n} . \frac{V}{L} = \frac{2\pi \chi^2_{113} V}{\lambda . n}$$

dans laquelle :
- λ est la longueur d'onde laser,
- n est l'indice de réfraction du film,
- V est la tension électrique du champ appliqué au film,
- L est l'épaisseur du film.

**2.** Polyuréthanne selon la revendication 1, caractérisé en ce qu'il est amorphe.

**3.** Polyuréthanne selon la revendication 1 ou 2, caractérisé en ce que **m** est supérieur à 10, de préférence compris entre 10 et 4 000.

**4.** Polyuréthanne selon la revendication 1, 2 ou 3, caractérisé en ce que le groupement **Y** représente les groupements suivants :

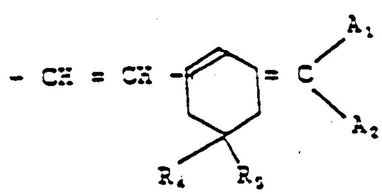 ; 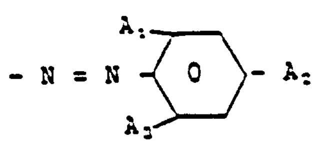 ;

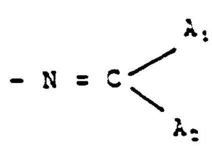 ; 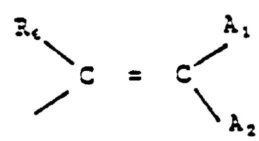

dans lesquelles :
- **A**$_1$, **A**$_2$ et **A**$_3$ identiques ou différents représentent l'hydrogène ou un radical accepteur d'électrons, ils ne peuvent représenter simultanément l'hydrogène,
- **R**$_4$, **R**$_5$ représentent un radical aliphatique comprenant de 1 à 4 atomes de carbone,
- **R**$_6$ représente l'hydrogène, un radical alkyle inférieur ou radical accepteur d'électrons (A).

**5.** Polyuréthanne selon l'une des revendications précédentes, caractérisé en ce que les radicaux accepteurs d'électrons (A) sont choisis dans le groupe comprenant les radicaux cyano ou nitro.

**6.** Polyuréthanne selon l'une des revendications précédentes, caractérisé en ce que les radicaux **R**$_1$ et **R**$_2$ représentent des chaînes méthylidènes comprenant de 1 à 6 atomes de carbone.

**7.** Polyuréthanne selon l'une des revendications précédentes, caractérisé en ce qu'il a une température de transition vitreuse supérieure à 30° C, de préférence comprise entre 40° C et 250° C.

**8.** Polyuréthanne selon l'une quelconque des revendications 1 à 7, caractérisé en ce qu'il est utilisé sous la forme d'un film, d'une fibre, d'une pièce moulée.

**9.** Dispositif optique, caractérisé en ce qu'il comprend un polyuréthanne selon l'une quelconque des revendications 1 à 8.

**10.** Procédé de synthèse d'un polyuréthanne possédant une activité optique non linéaire quadratique non nulle et stable et de motif récurrent répondant à la formule suivante :

(I) 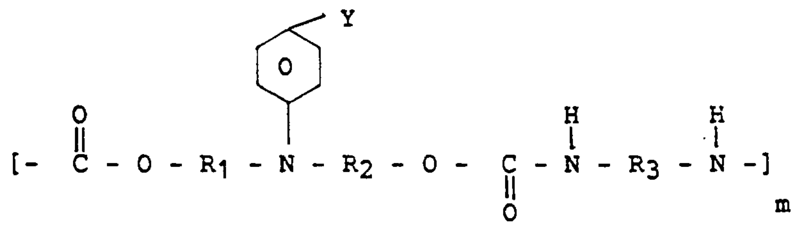

dans laquelle :

- **m** est un nombre supérieur à 5,
- $\mathbf{R}_1$, $\mathbf{R}_2$ identiques ou différents représentent un radical alkyle ou un radical aromatique,
- $\mathbf{R}_3$ représente un radical hydrocarboné aliphatique linéaire ou cyclique, aromatique ou arylaliphatique,
- **Y** représente un groupement comprenant un radical à électrons $\pi$ délocalisés et un groupement accepteur d'électrons (A),

caractérisé en ce qu'il consiste :

- à faire réagir un diisocyanate de formule :

**(II)** $ONC\text{-}R_3\text{-}CNO$

avec un composé de formule :

(III) 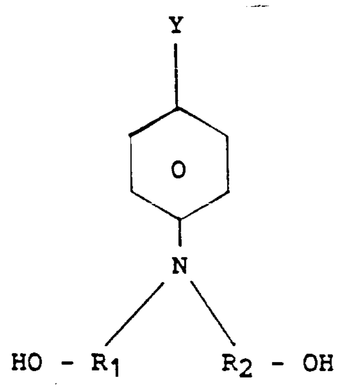

- à chauffer le polymère obtenu à une température au moins égale à sa température de transition vitreuse,
- à soumettre ledit polymère chauffé à un champ électrique, de façon à conférer au polymère une activité optique non linéaire quadratique $\chi^2_{333}$ (-ω, ω, o), stable et supérieure ou égale à 80 x $10^{-12}$ m x $V^{-1}$ à 633 nm, ledit $\chi^2_{333}$ (- ω, ω, o) étant donné par la relation : $\chi^2_{333}$ (- ω, ω, o) = $3.\chi^2_{113}$ (- ω, ω, o), le $\chi^2_{113}$ (- ω, ω, o) étant lui-même obtenu à partir d'une expérience d'électrooptique consistant :
  . à déposer un film du polyuréthanne sur une lame de verte recouverte d'un oxyde conducteur transparent ($SnO_2$),
  . à recouvrir la face extérieure du film par une couche d'or semi-transparente, l'oxyde et l'or servant d'électrodes à l'aide desquelles on polarise le film pour le rendre non centrsymétrique,

. à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,

. à soumettre le film à une tension alternative de 1 KHz et 10 V,

. et à déduire la susceptibilité quadratique $\chi^2_{113}$ (- ω, ω, o) du retard de phase Δφ provoqué par la tension appliquée au film, grâce à la relation suivante :

$$\Delta\phi = \frac{2\pi}{\lambda} . L . \frac{\chi^2_{113}}{n} . \frac{V}{L} = \frac{2\pi \chi^2_{113} V}{\lambda . n}$$

dans laquelle :

.. λ est la longueur d'onde laser,

.. n est l'indice de réfraction du film,

.. V est la tension électrique du champ appliqué au film,

.. L est l'épaisseur du film.

- puis à le refroidir.

**11.** Procédé de synthèse d'un polyuréthanne possédant une activité optique non linéaire quadratique non nulle et stable et de motif récurrent répondant à la formule suivante :

(I)

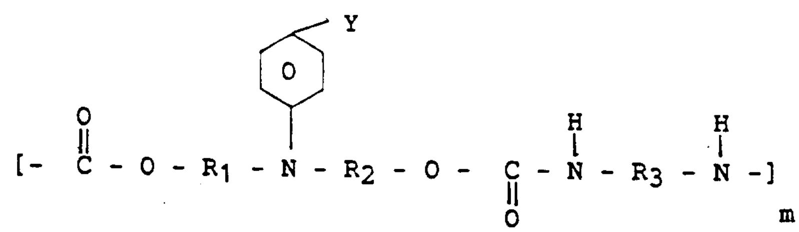

dans laquelle :

- **m** est un nombre supérieur à 5,
- **R**$_1$, **R**$_2$ identiques ou différents représentent un radical alkyle ou un radical aromatique,
- **R**$_3$ représente un radical hydrocarboné aliphatique linéaire ou cyclique, aromatique ou arylaliphatique,
- **Y** représente un groupement comprenant un radical à électrons π délocalisés et un groupement accepteur d'électrons (A) ,

caractérisé en ce qu'il consiste :

- à faire réagir :

. des composés difonctionnels du type diisocyanate de formule :

$ONC-R_3-CNO$

. des composés difonctionnels de formule :

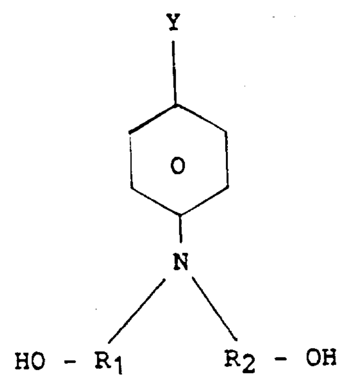

. et des composés polyfonctionnels,
de façon à faire une polymérisation partielle du mélange comprenant les composés difonctionnels et des composés polyfonctionnels,

- à chauffer le prépolymère ainsi obtenu à une température supérieure ou égale à sa température de ramollissement ou sa température de transition vitreuse électrique,
- à soumettre le prépolymère chauffé à un champ électrique, de façon à conférer au prépolymère une activité optique non linéaire quadratique $\chi^2_{333}$ (- ω, ω, o), stable et supérieure ou égale à 80 x $10^{-12}$ m x $V^{-1}$ à 633 nm, ledit $\chi^2_{333}$ (- ω, ω, o) étant donné par la relation : $\chi^2_{333}$ (- ω, ω, o) = 3.$\chi^2_{113}$ (- ω, ω, o), le $\chi^2_{113}$ (- ω, ω, o) étant lui-même obtenu à partir d'une expérience d'électrooptique consistant :
  . à déposer un film du polyuréthanne sur une lame de verte recouverte d'un oxyde conducteur transparent ($SnO_2$),
  . à recouvrir la face extérieure du film par une couche d'or semi-transparente, l'oxyde et l'or servant d'électrodes à l'aide desquelles on polarise le film pour le rendre non centrsymétrique,
  . à refroidir l'ensemble, à le placer dans l'un des bras d'un interféromètre de MACH ZENDER et à faire en sorte qu'il soit traversé sous incidence normale par un faisceau laser de longueur d'onde égale à 633 nm,
  . à soumettre le film à une tension alternative de 1 KHz et 10 V,
  . et à déduire la susceptibilité quadratique $\chi^2_{113}$ (- ω, ω, o) du retard de phase $\Delta\phi$ provoqué par la tension appliquée au film, grâce à la relation suivante :

$$\Delta \phi = \frac{2\pi}{\lambda} . L . \frac{\chi^2_{113}}{n} . \frac{V}{L} = \frac{2\pi \chi^2_{113} V}{\lambda . n}$$

  dans laquelle :
  .. λ est la longueur d'onde laser,
  .. n est l'indice de réfraction du film,
  .. V est la tension électrique du champ appliqué au film,
  .. L est l'épaisseur du film,
- puis à polymériser complètement le polymère.

## Claims

1. Polyurethane comprising recurring structural units having the following formula:

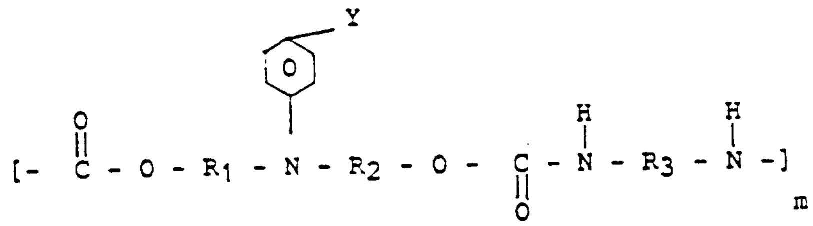

in which:

- m is a number greater than 5,
- $R_1$, $R_2$, which may be identical or different, are an alkyl radical or an aromatic radical,
- $R_3$ is a linear, aliphatic or cyclic, aromatic or arylaliphatic hydrocarbon radical,
- Y is a group which comprises a radical containing dislocated $\pi$ electrons and an electron acceptor group (A),

characterized in that it is oriented by an electrical field at a temperature higher than its glass transition temperature and cooled, so as to possess a quadratic nonlinear optical activity $\chi^2{}_{333}$ (- $\omega$, $\omega$, o), which is stable and greater than or equal to 80 x $10^{-12}$ m x $V^{-1}$ at 633 nm, said $\chi^2{}_{333}$ (-$\omega$, $\omega$, o) being given by the relationship: $\chi^2{}_{333}$ (-$\omega$, $\omega$, o) = 3 x $\chi^2{}_{113}$ (-$\omega$, $\omega$, o), $\chi^2{}_{113}$ (-$\omega$, $\omega$, o) being obtained from an electrooptical experiment consisting:

. in placing a film of the polyurethane on a sheet of glass covered with a transparent conductive oxide ($SnO_2$),

. in covering the external face of the film with a semi-transparent layer of gold, with the oxide and the gold serving as the electrodes whereby the film is polarized to render it noncentrosymmetrical,

. in cooling the assembly, in placing it in one of the arms of a MACH ZENDER interferometer and in causing it to be scanned at normal incidence by a laser beam having a wavelength of 633 nm,

. in exposing the film to alternating current of 1 KHz and 10 V,

. and in deriving the quadratic susceptibility $\chi^2{}_{113}$ (-$\omega$, $\omega$, o) from the delay of the phase $\Delta\Phi$ caused by the voltage applied to the film, according to the following relationship:

$$\Delta\Phi = \frac{2\pi}{\lambda} \cdot L \cdot \frac{\chi^2{}_{113}}{n} \cdot \frac{V}{L} = \frac{2\pi\chi^2{}_{113}V}{\lambda \cdot n}$$

in which:

.. $\lambda$ is the wavelength of the laser,
.. n is the index of refraction of the film,
.. V is the electric voltage of the field applied to the film,
.. L is the thickness of the film.

2. Polyurethane according to claim 1, characterized in that it is amorphous.

3. Polyurethane according to claim 1 or 2, characterized in that m is greater than 10, preferably ranging from 10 to 4,000.

**4.** Polyurethane according to claim 1, 2 or 3, characterized in that the group Y is the following groups:

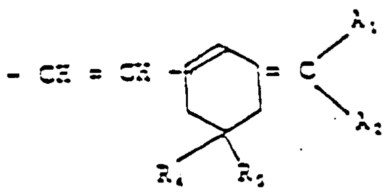

;

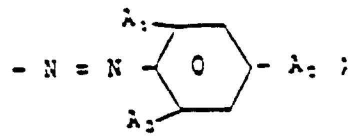

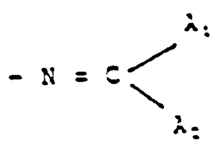

;

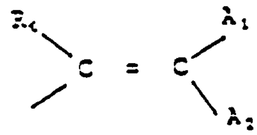

in which:

- $A_1$, $A_2$ and $A_3$, which may be identical or different, are a hydrogen atom or an electron acceptor radical, they cannot simultaneously be a hydrogen atom,
- $R_4$, $R_5$ are an aliphatic radical containing from 1 to 4 carbon atoms,
- $R_6$ is a hydrogen atom, a lower alkyl radical or an electron acceptor radical (A).

**5.** Polyurethane according to one of the preceding claims, characterized in that the electron acceptor radicals (A) are selected from the group comprising the cyano or nitro radicals.

**6.** Polyurethane according to one of the preceding claims, characterized in that the radicals $R_1$ and $R_2$ are methylidene chains containing from 1 to 6 carbon atoms.

**7.** Polyurethane according to one of the preceding claims, characterized in that it has a glass transition temperature higher than 30 °C, preferably ranging from 40 °C to 250 °C.

**8.** Polyurethane according to any one of claims 1 to 7, characterized in that it is used as films, fibers or molded shaped articles.

**9.** Optical device, characterized in that it comprises a polyurethane according to any one of claims 1 to 8.

**10.** Process for the synthesis of a polyurethane of a nonzero and stable quadratic nonlinear optical activity and of recurring structural units which has the following formula:

(I)

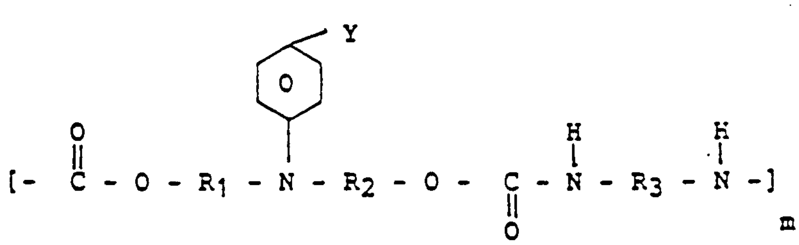

in which:

- m is a number greater than 5,
- $R_1$, $R_2$, which may be identical or different, are an alkyl radical or an aromatic radical,
- $R_3$ is a linear, aliphatic or cyclic, aromatic or arylaliphatic hydrocarbon radical,
- Y is a group which comprises a radical containing dislocated $\pi$ electrons and an electron acceptor group (A),

characterized in that it consists:

- in reacting a diisocyanate of formula:

(II) $ONC-R_3-CNO$

with a compound of formula:

(III)

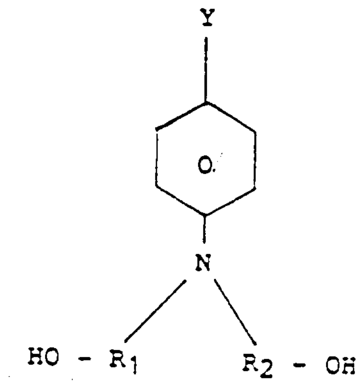

- in heating the polymer obtained to a temperature at least equal to its glass transition temperature,
- in exposing said heated polymer to an electrical field, so as to cause said polymer to have a quadratic nonlinear optical activity $\chi^2{}_{333}$ ($-\omega$, $\omega$, o), which is stable and greater than or equal to 80 x $10^{-12}$m x $V^{-1}$ at 633 nm, said $\chi^2{}_{333}$ ($-\omega$,$\omega$, o) being given by the relationship: $\chi^2{}_{333}$ ($-\omega$, $\omega$, o) = 3 x $\chi^2{}_{113}$ ($-\omega$, $\omega$, o), $\chi^2{}_{113}$ ($-\omega$, $\omega$, o) being obtained from an electrooptical experiment consisting:
  . in placing a film of the polyurethane on a sheet of glass covered with a transparent conductive oxide ($SnO_2$),
  . in covering the external face of the film with a semi-transparent layer of gold, with the oxide and the gold serving as the electrodes whereby the film is polarized to render it noncentrosymmetrical,
  . in cooling the assembly, in placing it in one of the arms of a MACH ZENDER interferometer and in causing it to be scanned at normal incidence by a laser beam having a wavelength of 633 nm,
  . in exposing the film to alternating current of 1 KHz and 10 V,
  . and in deriving the quadratic susceptibility $\chi^2{}_{113}$ ($-\omega$, $\omega$, o) from the delay of the phase $\Delta\Phi$ caused by the voltage applied to the film, according to the following relationship:

$$\Delta\Phi = \frac{2\pi}{\lambda} \, . \, L \, . \, \frac{\chi^2{}_{113}}{n} \, . \, \frac{V}{L} = \frac{2\pi\chi^2{}_{113}V}{\lambda \, . \, n}$$

in which:
.. $\lambda$ is the wavelength of the laser,
.. n is the index of refraction of the film,
.. V is the electric voltage of the field applied to the film,
.. L is the thickness of the film,
- then in cooling it.

**11.** Process for the synthesis of a polyurethane of a nonzero and stable quadratic nonlinear optical activity and of recurring structural units which has the following formula:

(I) 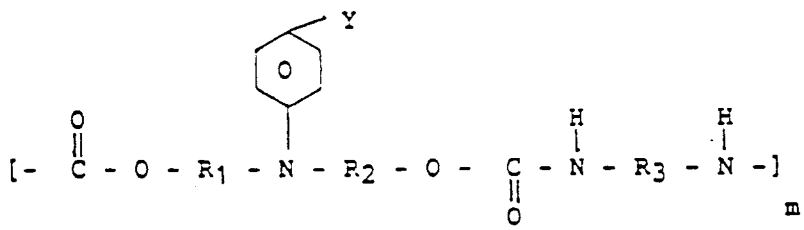

in which:

- m is a number greater than 5,
- $R_1$, $R_2$, which may be identical or different, are an alkyl radical or an aromatic radical,
- $R_3$ is a linear, aliphatic or cyclic, aromatic or arylaliphatic hydrocarbon radical,
- Y is a group which comprises a radical containing dislocated $\pi$ electrons and an electron acceptor group (A),

characterized in that it consists:

- in reacting:
  . difunctional compounds of the type diisocyanate of formula:

  $ONC-R_3-CNO$

  . difunctional compounds of formula:

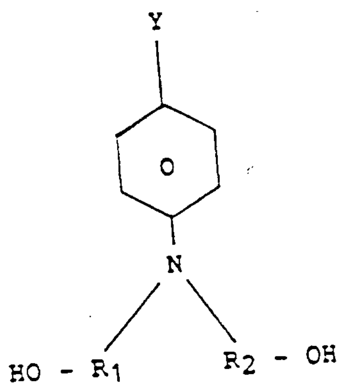

  . and polyfunctional compounds,

  so as to carry out a partial polymerization of the mixture comprising the difunctional compounds and the polyfunctional compounds,
- in heating the thus obtained prepolymer to a temperature higher than or equal to its softening temperature or electrical glass transition temperature,
- in exposing the heated prepolymer to an electrical field, so as to cause said polymer to have a quadratic nonlinear optical activity $\chi^2{}_{333}$ (-$\omega$, $\omega$, o), which is stable and greater than or equal to 80 x $10^{-12}$ m x $V^{-1}$ at 633 nm, said $\chi^2{}_{333}$ (-$\omega$,$\omega$, o) being given by the relationship: $\chi^2{}_{333}$ (-$\omega$, $\omega$, o) = 3 x $\chi^2{}_{113}$ (-$\omega$, $\omega$, o), $\chi^2{}_{113}$ (-$\omega$, $\omega$, o) being obtained from an electrooptical experiment consisting:
  . in placing a film of the polyurethane on a sheet of glass covered with a transparent conductive oxide ($SnO_2$),
  . in covering the external face of the film with a semi-transparent layer of gold, with the oxide and the gold serving as the electrodes whereby the film is polarized to render it noncentrosymmetrical,
  . in cooling the assembly, in placing it in one of the arms of a MACH ZENDER interferometer and in causing it to be scanned at normal incidence by a laser beam having a wavelength of 633 nm,
  . in exposing the film to alternating current of 1 KHz and 10 V,
  . and in deriving the quadratic susceptibility $\chi^2{}_{113}$ (-$\omega$, $\omega$, o) from the delay of the phase $\Delta\Phi$ caused by the voltage applied to the film, according to the following relationship:

$$\Delta\Phi = \frac{2\pi}{\lambda} . L . \frac{\chi^2_{113}}{n} . \frac{V}{L} = \frac{2\pi\chi^2_{113}V}{\lambda . n}$$

in which:
.. $\lambda$ is the wavelength of the laser,
.. n is the index of refraction of the film,
.. V is the electric voltage of the field applied to the film,
.. L is the thickness of the film,
- then in completely polymerizing the polymer.

## Patentansprüche

**1.** Polyurethan mit einer wiederkehrenden Einheit der folgenden Formel

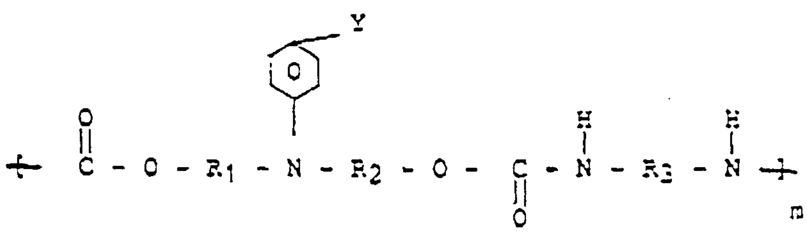
(I),

worin bedeuten:
- m eine Zahl größer als 5,
- $R_1$, $R_2$, die gleich oder verschieden sein können, einen Alkylrest oder einen aromatischen Rest,
- $R_3$ einen linearen oder cyclischen aliphatischen Kohlenwasserstoffrest, einen aromatischen oder einen arylaliphatischen Rest,
- Y eine Gruppe, die einen Rest mit delokalisierten $\pi$-Elektronen und eine Elektronenakzeptorgruppe (A) umfaßt,

dadurch gekennzeichnet, daß es bei einer Temperatur oberhalb seiner Glasübergangstemperatur durch ein elektrisches Feld orientiert und abgekühlt ist, so daß es eine stabile nichtlineare Suszeptibilität zweiter Ordnung $\chi^2_{333}$ (-$\omega$, $\omega$, 0) von $80 \cdot 10^{-12}$ m/V oder darüber bei 633 nm besitzt, wobei $\chi^2_{333}$ (-$\omega$, $\omega$, 0) gegeben ist durch die Beziehung: $\chi^2_{333}$ (-$\omega$, $\omega$, 0) = 3 $\chi^2_{113}$ (-$\omega$, $\omega$, 0), wobei $\chi^2_{113}$ (-$\omega$, $\omega$, 0) aus einem elektrooptischen Experiment bestimmt wird, das darin besteht,
- einen Film aus dem Polyurethan auf einer mit einem transparenten, leitfähigen Oxid ($SnO_2$) bedeckten Glasscheibe aufzubringen,
- die Außenseite des Films mit einer halbtransparenten Goldschicht zu bedecken, wobei das Oxid und das Gold als Elektroden dienen, mit deren Hilfe der Film polarisiert wird, um ihn nichtzentrosymmetrisch zu machen,
- die Anordnung abzukühlen, sie in einem der Arme eines Mach-Zehnder-Interferometers anzuordnen und einen Laserstrahl mit einer Wellenlänge von 633 nm unter senkrechtem Einfall durch sie hindurchzuführen,
- den Film einer Wechselspannung von 1 KHz und 10 V auszusetzen
- und die Suszeptibilität zweiter Ordnung $\chi^2_{113}$ (-$\omega$, $\omega$, 0) aus der durch die an den Film angelegte Spannung hervorgerufenen Phasenverzögerung $\Delta\phi$ mit der Beziehung

$$\Delta\phi = \frac{2\pi}{\lambda} \cdot L \cdot \frac{\chi^2_{113}}{n} \cdot \frac{V}{L} = \frac{2\pi\chi^2_{113}V}{\lambda \cdot n}$$

zu bestimmen, in der

- λ die Laserwellenlänge,
- n der Brechungsindex des Films,
- V die Potentialdifferenz des an den Film angelegten elektrischen Feldes und
- L die Dicke des Films ist.

**2.** Polyurethan nach Anspruch 1, dadurch gekennzeichnet, daß es amorph ist.

**3.** Polyurethan nach Anspruch 1 oder 2, dadurch gekennzeichnet, daß m größer als 10 ist und vorzugsweise zwischen 10 und 4000 liegt.

**4.** Polyurethan nach Anspruch 1, 2 oder 3, dadurch gekennzeichnet, daß Y folgende Gruppen darstellt:

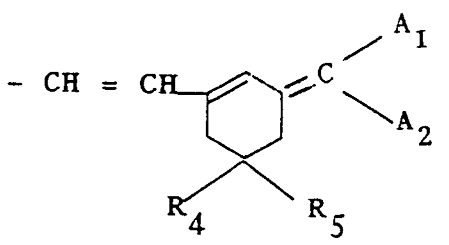 ; 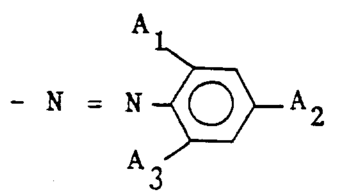 ;

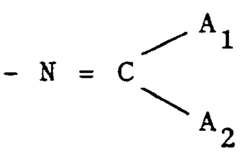 ; 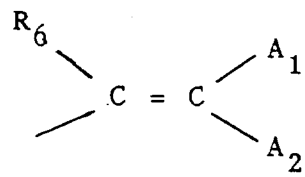

worin bedeuten:

- $A_1$, $A_2$ und $A_3$, die gleich oder verschieden sein können, Wasserstoff oder einen Elektronenakzeptorrest, nicht aber gleichzeitig Wasserstoff,
- $R_4$, $R_5$ einen aliphatischen Rest mit 1 bis 4 Kohlenstoffatomen,
- $R_6$ Wasserstoff, einen niederen Alkylrest oder einen Elektronenakzeptorrest (A).

**5.** Polyurethan nach einem der vorhergehenden Ansprüche, dadurch gekennzeichnet, daß die Elektronenakzeptorreste (A) unter Cyano und Nitro ausgewählt sind.

**6.** Polyurethan nach einem der vorhergehenden Ansprüche, dadurch gekennzeichnet, daß die Reste $R_1$ und $R_2$ Methylidenketten mit 1 bis 6 Kohlenstoffatomen sind.

**7.** Polyurethan nach einem der vorhergehenden Ansprüche, dadurch gekennzeichnet, daß es eine Glasübergangstemperatur von über 30 °C, vorzugsweise von 40 bis 250 °C, aufweist.

**8.** Polyurethan nach einem der Ansprüche 1 bis 7, dadurch gekennzeichnet, daß es in Form eines Films, einer Faser oder eines Formteils verwendet wird.

**9.** Optisches Bauelement, dadurch gekennzeichnet, daß es ein Polyurethan nach einem der Ansprüche 1 bis 8 enthält.

**10.** Verfahren zur Herstellung eines Polyurethans mit nichtverschwindender, stabiler nichtlinearer Suszeptibilität zweiter Ordnung und einer wiederkehrenden Einheit der folgenden Formel

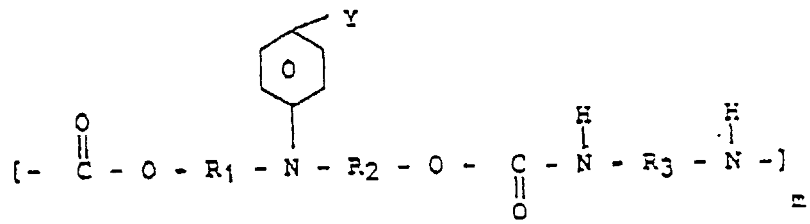 (I),

worin bedeuten:
- m eine Zahl größer als 5,
- $R_1$, $R_2$, die gleich oder verschieden sein können, einen Alkylrest oder einen aromatischen Rest,
- $R_3$ einen linearen oder cyclischen aliphatischen Kohlenwasserstoffrest, einen aromatischen Rest oder einen arylaliphatischen Rest,
- Y eine Gruppe, die einen Rest mit delokalisierten $\pi$-Elektronen und eine Elektronenakzeptorgruppe (A) umfaßt,

dadurch gekennzeichnet, daß
- ein Diisocyanat der Formel

  $ONC\text{-}R_3\text{-}CNO$ (II)

  mit einer Verbindung der Formel

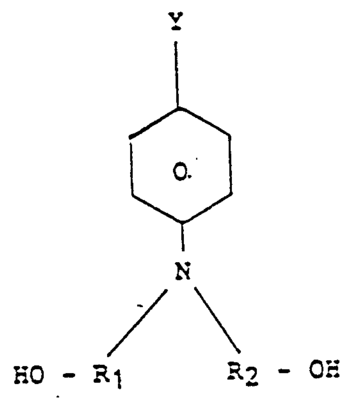

(III),

  umgesetzt wird,
- das erhaltene Polymer auf eine Temperatur erwärmt wird, die wenigstens gleich seiner Glasübergangstemperatur ist und
- das erwärmte Polymer einem elektrischen Feld ausgesetzt wird, um dem Polymer eine stabile nichtlineare Suszeptibilität zweiter Ordnung $\chi^2{}_{333}$ (-ω, ω, 0) von $80 \cdot 10^{-12}$ m/V oder darüber bei 633 nm zu verleihen, wobei $\chi^2{}_{333}$ (-ω, ω, 0) gegeben ist durch die Beziehung $\chi^2{}_{333}$ (-ω, ω, 0) = $3 \cdot \chi^2{}_{113}$ (-ω, ω, 0), wobei $\chi^2{}_{113}$ (-ω, ω, 0) aus einem elektrooptischen Experiment bestimmt wird, das darin besteht
  . einen Film aus dem Polyurethan auf einer mit einem transparenten, leitfähigen Oxid ($SnO_2$) bedeckten Glasscheibe aufzubringen,
  . die Außenseite des Films mit einer halbtransparenten Goldschicht zu bedecken, wobei das Oxid und das Gold als Elektroden dienen, mit deren Hilfe der Film polarisiert wird, um ihn nichtzentrosymmetrisch zu machen,
  . die Anordnung abzukühlen, sie in einem der Arme eines Mach-Zehnder-Interferometers anzuordnen und einen Laserstrahl mit einer Wellenlänge von 633 nm unter senkrechtem Einfall durch sie hindurchzuführen,
  . den Film einer Wechselspannung von 1 KHz und 10 V auszusetzen,
  . die nichtlineare Suszeptibilität zweiter Ordnung $\chi^2{}_{113}$ (-ω, ω, 0) aus der durch die an den Film angelegte Spannung hervorgerufenen Phasenverzögerung $\Delta\phi$ mit der Beziehung

$$\Delta\phi = \frac{2\pi}{\lambda} \cdot L \cdot \frac{\chi^2_{113}}{n} \cdot \frac{V}{L} = \frac{2\pi\chi^2_{113}V}{\lambda \cdot n}$$

zu bestimmen, in der

.. λ die Wellenlänge des Lasers,

.. n der Brechungsindex des Films,

.. V die Potentialdifferenz des an den Film angelegten elektrischen Feldes und

.. L die Dicke des Films ist,

und

- es anschließend abgekühlt wird.

**11.** Verfahren zur Herstellung eines Polyurethans mit nichtverschwindender, stabiler nichtlinearer Suszeptibilität zweiter Ordnung und eine wiederkehrende Einheit der folgenden Formel

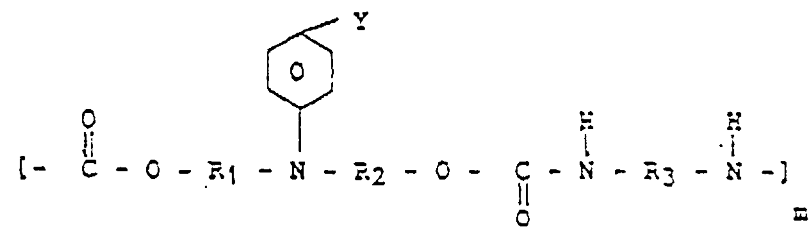

(I),

worin bedeuten:

- m eine Zahl größer als 5,
- $R_1$, $R_2$, die gleich oder verschieden sein können, einen Alkylrest oder einen aromatischen Rest,
- $R_3$ einen linearen oder cyclischen aliphatischen Kohlenwasserstoffrest, einen aromatischen Rest oder einen arylaliphatischen Rest,
- Y eine Gruppe, die einen Rest mit delokalisierten π-Elektronen und eine Elektronenakzeptorgruppe (A) umfaßt,

dadurch gekennzeichnet, daß

-

. difunktionelle Diisocyanatverbindungen der Formel

$ONC-R_3-CNO$ ,

. difunktionelle Verbindungen der Formel

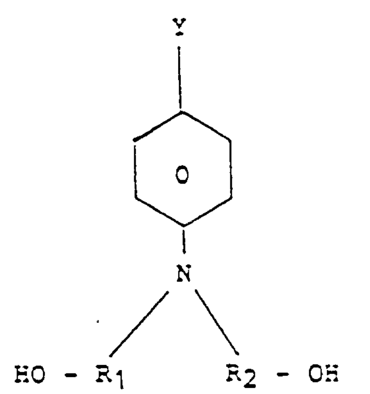

. und polyfunktionelle Verbindungen

zur Reaktion gebracht werden,

um eine partielle Polymerisierung des die difunktionellen Verbindungen und die polyfunktionellen

Verbindungen enthaltenden Gemischs durchzuführen,

- das so erhaltene Prepolymer auf eine Temperatur gleich der oder über seiner Erweichungstemperatur oder seiner Glasübergangstemperatur erwärmt wird,
- das erwärmte Prepolymer einem elektrischen Feld ausgesetzt wird, um ihm eine stabile nichtlineare Suszeptibilität zweiter Ordnung $\chi^2{}_{333}$ (-ω, ω, 0) von $80 \cdot 10^{-12}$ m/V oder darüber bei 633 nm zu verleihen, wobei $\chi^2{}_{333}$ (-ω, ω, 0) durch die Beziehung $\chi^2{}_{333}$ (-ω, ω, 0) = $3 \cdot \chi^2{}_{113}$ (-ω, ω, 0) gegeben ist, wobei $\chi^2{}_{113}$ (-ω, ω, 0) aus einem elektrooptischen Experiment ermittelt wird, das darin besteht,
  . einen Film aus dem Polyurethan auf eine mit einem transparenten, leitfähigen Oxid ($SnO_2$) bedeckte Glasscheibe aufzubringen,
  . die Außenseite des Films mit einer halbtransparenten Goldschicht zu bedecken, wobei das Oxid und das Gold als Elektroden dienen, mit deren Hilfe der Film polarisiert wird, um ihn nichtzentrosymmetrisch zu machen,
  . die Anordnung abzukühlen, sie in einem der Arme eines Mach-Zehnder-Interferometers anzuordnen und einen Laserstrahl mit einer Wellenlänge von 633 nm unter senkrechtem Einfall durch sie hindurchzuführen,
  . den Film einer Wechselspannung von 1 KHz und 10 V auszusetzen,
  . die Suszeptibilität zweiter Ordnung $\chi^2{}_{113}$ (-ω, ω, 0) aus der durch die an den Film angelegte Wechselspannung hervorgerufenen Phasenverzögerung $\Delta\phi$ mit Hilfe der Beziehung

$$\Delta\phi = \frac{2\pi}{\lambda} \cdot L \cdot \frac{\chi^2_{113}}{n} \cdot \frac{V}{L} = \frac{2\pi\chi^2_{113}V}{\lambda \cdot n}$$

  zu bestimmen, in der
  .. λ die Laserwellenlänge,
  .. n der Brechungsindex des Films,
  .. V die Potentialdifferenz des an den Film angelegten elektrischen Feldes und
  .. L die Dicke des Films ist,

  und
- anschließend das Polymer vollständig polymerisiert wird.